(19) Europäisches Patentamt
European Patent Office
Office européen des brevets

(11) **EP 4 451 230 A1**

(12) **EUROPEAN PATENT APPLICATION**

(43) Date of publication:
**23.10.2024 Bulletin 2024/43**

(21) Application number: **23168202.2**

(22) Date of filing: **17.04.2023**

(51) International Patent Classification (IPC):
**G06V 10/774** $^{(2022.01)}$　　**G06V 10/26** $^{(2022.01)}$

(52) Cooperative Patent Classification (CPC):
**G06V 10/7753; G06V 10/26; G06V 20/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **TOYOTA JIDOSHA KABUSHIKI KAISHA
Toyota-Shi, Aichi-Ken 471-8571 (JP)**
• **Max-Planck-Gesellschaft zur Förderung der
Wissenschaften e.V.
80539 München (DE)**

(72) Inventors:
• **OLMEDA REINO, Daniel
1140 BRUSSELS (BE)**

• **DAS, Anurag
80539 MUNICH (DE)**
• **DAI, Dengxin
80539 MUNICH (DE)**
• **SCHIELE, Bernt
80539 MUNICH (DE)**
• **XIAN, Yongqin
80539 MUNICH (DE)**

(74) Representative: **Cabinet Beau de Loménie
158, rue de l'Université
75340 Paris Cedex 07 (FR)**

Remarks:
Amended claims in accordance with Rule 137(2)
EPC.

(54) **METHOD FOR TRAINING AN IMAGE SEGMENTATION MODEL**

(57) The present invention relates to a method for training an image segmentation model (ISM) for segmenting images (IMG) of a second type, the model (ISM) having been trained (T100) using a first set ( $\mathcal{X}_s$ ) of images of a first type and having labels ( $\mathcal{Y}_s$ ), the method comprising training (T200) the model (ISM) using at least a second set ( $\mathcal{X}_t$ ) of images of the second type and having weak-labels ( $\mathcal{Y}_t$ ), the weakly-labeled images comprising unlabeled pixels, wherein said training (T200) is performed using a loss function ( $\mathcal{L}$ ) based on: similarity measures ( $f_t^i \cdot \eta_t^k$ ) between class prototypes ( $\eta_t^k$ ) and features ( $f_t^i$ ) of the images of the second set ( $\mathcal{X}_t$ ); and on the weak-labels ( $y_t^{(i,k)}$ )

of the images of the second set ( $\mathcal{X}_t$ ).

FIG. 3B

EP 4 451 230 A1

**Description**

BACKGROUND OF THE INVENTION

1. Field of the Invention

The present invention relates to the field of computer vision using machine learning techniques. More particularly, the present invention relates to a method for training an image segmentation model. The present invention is particularly advantageous for implementing driving assistance systems for autonomous vehicles, but such an application is only given as an illustrative example.

2. Description of Related Art

Image segmentation is a computer-vision task critical to numerous applications such as autonomous driving systems, or medical imaging. In particular, semantic image segmentation consists in classifying the different regions of a digital image (*i.e.,* assigning class labels to pixels of the image). For example, in the context of driving assistance systems, semantic image segmentation is used to localize and identify, in images captured by cameras embedded in the vehicle, different objects such as pedestrians, sidewalks, other vehicles, *etc.* The development of machine learning techniques led to considerable improvements in image segmentation. Still, implementing autonomous driving systems capable of performing accurate image segmentation is particularly demanding.

Supervised learning techniques allow providing image segmentation models achieving high accuracy. However, training an image segmentation model using supervised learning requires a set of training images with pixel-level annotations (*i.e.,* fully-labeled images), which is expensive and time-consuming. Collecting such training images is even more difficult in the context of real urban scenes, since such scenes contain numerous objects to be annotated. It is hence difficult and costly to collect training images of urban scenes with fine annotations for developing autonomous driving systems.

To overcome the need for real-world images with expensive pixel-level labels, some recent works have proposed using synthetic images (*i.e.,* computer-generated images with pixel-level labels). Datasets including synthetic images of urban scenes can be used to train image segmentation models. However, this solution is not entirely satisfying as there exists a substantial performance gap when compared with supervised learning. The domain shift from synthetic images (*i.e.,* the source domain) to real-word images (*i.e.,* the target domain) results in a significant loss of accuracy. In other words, training an image segmentation model using only synthetic images and then using the trained model on real-world images does not allow achieving accurate image segmentation.

In a similar perspective, some other solutions have also been developed using weakly supervised training. The use of real-world images with point-level labels, coarse labels, or image-level labels (*i.e.,* weakly-labeled images of the target domain) relaxes the aforementioned problem associated to domain shift. Though these solutions allow training image segmentation models without using fully labeled real images, the trained models present a limited accuracy.

Therefore, there exists a need for a solution for training an image segmentation model without using fully-labeled real-world images, such that the trained model performs accurate segmentation of real-world images.

SUMMARY OF THE INVENTION

The present invention has been made in the light of the above problems

<u>According to an aspect</u>, the present invention provides a (computer-implemented) method for training an image segmentation model for segmenting images of a second type, the model having been trained using a first set of images of a first type (distinct from the second type) and having labels. The method comprises training the model using at least a second set of images of the second type and having weak-labels (*e.g.*, point-level labels, coarse labels, or image-level labels), the weakly-labeled images comprising unlabeled pixels, wherein said training is performed using a loss function based on: similarity measures between class prototypes and features of the images of the second set; and on the weak-labels of the images of the second set.

The present invention is directed to training an image segmentation model to perform image segmentation on images of a second type (*i.e.,* a target domain). The model is initially trained using a first set with labeled images of a first type (*i.e.,* a source domain). Then, to improve the adaptation of the model from images of the first type to images of the second type (*i.e.,* the domain adaptation from the source to the target domain), the present invention proposes training the model using a second set with weakly-labeled images of the second type (*i.e.,* the target domain).

Specifically, the present invention proposes training the image segmentation model using prototype-based learning guided by the weak-labels of images of the second type. The class prototypes are features that are respectively representative of the different classes. In the present invention, the class prototypes are obtained under the guidance of the weak-labels. This allows obtaining prototypes that are effectively representative of the class features for images of the second type (*i.e.,* in the target domain).

The results of experiments conducted on standard datasets confirm that the use of weakly-labeled images of the second type significantly improves the domain adaptation of the image segmentation model (*i.e.,* from images of the first type to images of the second type). Experimental results show that the present invention provides substantial performance improvements compared to existing solutions, in terms of accuracy of the image segmentation model. The present invention is even able to bridge the aforementioned performance gap with supervised learning.

In addition, the proposed solution advantageously defines a common framework that allows using different types of weak-labels for the images of the second type, such as image-level labels, point-level labels, or coarse labels.

Here, we refer to "images with point-level labels" as images having at least one pixel annotated per class present in an image. The term "images with coarse labels" refers to images in which pixel regions are partially annotated with class labels so as to coarsely identify objects in the images. For example, images with coarse labels can be obtained by drawing polygons to label the objects in the images while ignoring the fine details of the object boundaries. Also, we refer to "images with image-level labels" as images with labels identifying the classes present in the images, but whose pixels are not annotated.

For these reasons, the present invention provides a solution for training an image segmentation model without using fully-labeled images of the second type (*i.e.,* fully-labeled images of the target domain), such that the trained model performs accurate segmentation of images of the second type.

In a particular embodiment, the first type of images corresponds to synthetic (computer-generated) images, and the second type of images corresponds to images captured by at least one (non-virtual) camera.

In this embodiment, the training of the image segmentation model is performed using synthetic images and real-world images with weak-labels. This embodiment allows obtaining a model capable of performing accurate segmentation of real-world images, without using fully-labeled real-world images for training (*i.e.,* images that are expensive and time-consuming to collect). This is particularly advantageous for developing image segmentation models to be used in driving assistance systems for autonomous vehicles.

However, the present invention is not limited to this particular embodiment and applies to other types of images (*i.e.,* other source and target domains). For example, embodiments could be envisaged in which the first type corresponds to images of urban scenes in Europe and the second type corresponds to images of urban scenes in the United States. In a different application context, such as medical imaging, it could be envisaged that images of the first type and images of the second type are produced by different equipment, or correspond to different clinical sites.

In a particular embodiment, the image segmentation model comprises a first neural network (referred to as the backbone network) and a second neural network (referred to as the image segmentation network). In this embodiment, the backbone network is used to obtain features of the images provided at its input, and the image segmentation network is used to obtain class labels for the pixels of the images based on said features.

The backbone network (*e.g.,* a convolutional neural network) is used to extract features of the images. This allows learning discriminative representations of the images to perform accurate image segmentation.

In a particular embodiment, the class prototypes are obtained using: the weak-labels of the images of the second set; and/or pseudo-labels for the unlabeled pixels of the images of the second set.

Here, the class prototypes are obtained using the weak-labels and/or the pseudo-labels of the images of the second type (*i.e.,* the target domain). For the unlabeled pixels of the images of the second type, the pseudo-labels are obtained using class prediction probabilities provided by the image segmentation model or another model (for instance, a teacher model as detailed hereinafter).

This embodiment contributes to obtaining class prototypes that are representative of the class features in the images of the second type (*i.e.,* the target domain). Improved training of the image segmentation model and accuracy of the model follow as results.

In a particular embodiment, the class prototypes are obtained based on the expression:

$$\eta_t^k = \frac{\sum_i f_t^i \cdot \left[\bar{y}_t^{(i,k)} = 1\right] \cdot w^{(i,k)}}{\sum_i \left[\bar{y}_t^{(i,k)} = 1\right] \cdot w^{(i,k)}},$$

where: $k$ is a class index; $i$ is a pixel index; $f_t^i$ is a pixel feature of an image of the second set; $[\cdot]$ denotes the Iverson bracket; $\bar{y}_t = y_t \cup \hat{y}_t$, the union of the pseudo-labels $\hat{y}_t$ and the weak-labels $y_t$ of the images of the second set; and weight

$$w^{(i,k)} = f_t^i \cdot a_t^k$$ with $a_t^k$ an anchor feature expressed by, if the images of the second set comprise point-level labels or coarse labels:

$$a_t^k = \frac{\sum_i f_t^i \cdot \left[y_t^{(i,k)} = 1\right]}{\sum_i \left[y_t^{(i,k)} = 1\right]},$$

or with $a_t^k$ expressed by, if the images of the second set comprise image-level labels:

$$a_t^k = \frac{\sum_i f_t^i \cdot \left[\hat{y}_t^{(i,k)} = 1\right]}{\sum_i \mathbf{1}\left[\hat{y}_t^{(i,k)} = 1\right]}.$$

For point-level labels and coarse labels, the labeled pixels are used to compute the class prototypes. The proposed computation assigns higher weights to pixel features with weak-labels (*i.e.*, labeled pixels). This allows the class prototypes to be closer to the pixels features with weak-labels than the pixel features with pseudo-labels, which can be noisy. This embodiment contributes to obtaining efficient class prototypes for images of the second type (*i.e., the target domain*). It improves the accuracy of the model for segmenting images of the second type.

In a particular embodiment, the loss function is based on a first component expressed by:

$$\mathcal{L}_{\text{image}}^1 = \sum_{k=1}^{K} -y_t^k \log\left(p_t^k\right) - \left(1 - y_t^k\right) \log\left(1 - p_t^k\right),$$

where: *k* is a class index; *K* is a number of classes; $y_t^k$ is an image label such that $y_t^k$ equals 1 if the class *k* is present in an image of the second set and 0 otherwise; and $p_t^k$ is an image-level prediction expressed by:

$$p_t^k = \sigma\left(\log\left(\frac{1}{N} \cdot \sum_{i=1}^{N} \exp\left(m^{(i,k)}\right)\right)\right),$$

where: $\sigma$ is a sigmoid function; *i* is a pixel index; *N* is a number of pixels; and $m^{(i,k)}$ are similarity measures between the features $f_t^i$ and the class prototypes $\eta_t^k$ (*e.g.*, $m^{(i,k)} = f_t^i \cdot \eta_t^k$).

The component $\mathcal{L}_{\text{image}}^1$ of the loss function is based on the class prototypes and is used to learn a feature space such that features are close to prototypes of classes present in an image and distant from prototypes of classes not present in an image. It should also be noted that the image-level labels $y_t^k$ used in the component $\mathcal{L}_{\text{image}}^1$ are obtained from the weak-labels $y_t$. Thereby, the component $\mathcal{L}_{\text{image}}^1$ capitalizes on prototype-based learning guided by the weak-labels to learn discriminative representations of the images of the second type (*i.e.*, the target domain) and perform accurate image segmentation.

In a particular embodiment, the loss function is further based on contrastive learning.

According to this embodiment, the proposed training method not only uses prototype-based learning, but also contrastive learning. The use of contrastive learning allows learning a feature space wherein pixels of a same class present similar features (*i.e.,* are close to each other) and pixels of different classes present dissimilar features (*i.e.,* are far from each other). This embodiment contributes to improving the accuracy of the model, by learning discriminative representations of the images of the second type.

<u>In a particular embodiment,</u> the loss function is based on a second component expressed by:

$$\mathcal{L}_{\text{intra}}^t = -\frac{1}{N_t{}'} \sum_{i \in S_t} \log\left(\frac{\exp(f_t^i \cdot n_t^k / \tau)}{\exp(f_t^i \cdot n_t^k / \tau) + \sum_{c \neq k} \exp(f_t^i \cdot n_t^c / \tau)}\right),$$

where: *i* is a pixel-index; $S_t$ is a set of pixels of the images of the second set; $N_t'$ is a number of pixels; $f_t^i$ denotes a pixel feature of an image of the second set; $n_t^k$ denotes the prototype of the class to which belongs the feature $f_t^i$; and $\tau$ is a confidence parameter (*e.g.,* $\tau$ = 0.96).

In this embodiment, the loss function is based on contrastive learning by using the component $\mathcal{L}_{\text{intra}}^t$. This component is used to align the features of images of the second type with their corresponding class prototypes (*i.e.,* intra-domain alignment in the target domain). In other words, this embodiment allows learning a feature space in which the features of pixels belonging to a class are close to the prototype of this class. This embodiment contributes to learning compact and discriminative representations.

<u>In a particular embodiment,</u> said training of the image segmentation model also uses the first set of images of the first type.

Here the proposed method uses during said training: the set of weakly-labeled images of the second type (*i.e.,* the target domain); and also the set of labeled images of the first type (*i.e.,* the source domain). The experimental results show that this embodiment allows achieving significant performance gains. The joint use of labeled images of the first type (*i.e.,* the source domain) and weakly-labeled images of the second type (*i.e.,* the target domain) improving, in a synergetic way, the accuracy of the model.

<u>In a particular embodiment,</u> the loss function is further based on (asymmetric domain alignment by using) similarity measures between features of images of the first set and the class prototypes obtained for the images of the second set.

This embodiment proposes to perform an asymmetric inter-domain alignment during said training. Specifically, the features of pixels of images of the first type (*i.e.,* features of the source domain) are aligned with their corresponding class prototypes obtained using the images of the second type (*i.e.,* class prototypes of the target domain).

It is important to note that the proposed inter-domain alignment is performed in an asymmetric way. The features of images of the second type (*i.e.,* features of the target domain) are not aligned with corresponding class prototypes of the images of the first type (*i.e.,* class prototypes of the source domain). Hence, this asymmetric alignment only changes the features of images of the first type (*i.e.,* feature of the source domain) and preserves the features of images of the second type (*i.e.,* features of the target domain).

The proposed asymmetric alignment is particularly advantageous when using weakly-labeled images of the second type. It allows reducing the domain gap between the first and second types (*i.e.,* between the source and target domains) and improving the domain adaptation of the image segmentation model. The experiments show that such asymmetric alignment results in substantial performance enhancements of the model.

<u>In a particular embodiment,</u> the loss function is based on a third component expressed by:

$$\mathcal{L}_{\text{inter}} = -\frac{1}{N_s{}'} \sum_{i \in S_s} \log\left(\frac{\exp(f_s^i \cdot n_t^k / \tau)}{\exp(f_s^i \cdot n_t^k / \tau) + \sum_{c \neq k} \exp(f_s^i \cdot n_t^c / \tau)}\right),$$

where: *i* is a pixel-index; $S_s$ is a set of pixels of the images of the first set; $N_s'$ is a number of pixels; $f_s^i$ denotes a pixel feature of an image of the first set; $n_t^k$ denotes the prototype of the class to which belongs the feature $f_s^i$; and $\tau$ is

a confidence parameter

In this embodiment, the loss function is based on contrastive learning with asymmetric inter-domain alignment by using the component $\mathcal{L}_{inter}$. This component is used to learn a feature space in which the features of images of the first type (*i.e.,* feature of the source domain) belonging to a class are close to the corresponding class prototype obtained using the images of the second types (*i.e.,* class prototypes of the target domain).

According to another aspect, the invention provides a (computer-implemented) method for segmenting images of a second type using an image segmentation model trained by the training method conforming to the invention.

According to another aspect, the invention provides an image segmentation model for segmenting images of a second type, wherein the image segmentation model has been trained using the training method conforming to the invention.

Furthermore, the invention extends to a computer-readable medium having stored thereon a program for implementing an image segmentation model conforming to the invention. In addition, the invention also provides a computer-readable medium having stored thereon data representative of an image segmentation model conforming to the invention, such as hyperparameters and/or weights of the model.

According to another aspect, the invention provides an image segmentation device comprising at least one processor and memory, the device being configured to implement an image segmentation model conforming to the invention. Further, the image segmentation device is configured to implement an image segmentation method conforming to the invention.

According to another aspect, the invention provides a driving assistance system comprising: a camera for capturing images; and an image segmentation device conforming to the invention for segmenting the captured images.

According to another aspect, the invention provides a computer program comprising instructions which, when the program is executed by at least one processor or a computer, cause said at least one processor or computer to implement a training method conforming to the invention, or an image segmentation method conforming to the invention.

It should be noted that the computer programs referred to here may use any programming language, and be in the form of source code, object code, or code intermediate between source code and object code, such as in a partially compiled form, or in any other desirable form.

According to another aspect, the invention provides a computer-readable medium having stored thereon the computer program conforming to the invention.

The computer-readable medium referred to in this statement may be any entity or device capable of storing the program and readable by any computer equipment, including a computer. For example, the medium may include a storage medium, or a magnetic storage medium, such as a hard drive. Alternatively, the storage medium may correspond to a computer integrated circuit in which the program is incorporated and adapted to execute a method as described above or to be used in the execution of such method.

It should be emphasized that the proposed image segmentation model, image segmentation method, image segmentation device, driving assistance system, computer program, and computer-readable medium present the advantages described above in relation with the proposed method for training an image segmentation model.

BRIEF DESCRIPTION OF THE DRAWINGS

Features, advantages, and technical and industrial significance of exemplary embodiments of the invention will be described below with reference to the accompanying drawings, in which like reference signs denote like elements, and wherein:

FIG. 1 illustrates the architecture of a driving assistance system according to an embodiment of the invention;

FIG. 2A illustrates the architecture of an image segmentation device according to an embodiment of the invention;

FIG. 2B illustrates the steps of a method for performing image segmentation according to an embodiment of the invention;

FIG. 2C illustrates captured images and segmented images processed by an image segmentation device according to an embodiment of the invention;

FIG. 3A illustrates fully-labeled synthetic images and weakly-labeled real-world images used for training an image segmentation model according to embodiments of the invention;

FIG. 3B illustrates the steps of a method for training an image segmentation model according to an embodiment of the invention;

FIG. 3C illustrates the steps for evaluating the loss function in a method for training an image segmentation model according to an embodiment of the invention; and

FIG. 4 illustrates experimental results related to a method for training an image segmentation model according to an embodiment of the invention.

## DETAILED DESCRIPTION OF EXAMPLE EMBODIMENTS

The present invention is particularly advantageous for implementing a driving assistance system for semi-autonomous or autonomous vehicles. The following description of the invention will refer to this particular application, which is provided only as an illustrative example. This example application should not limit the present invention which extends to other applications of image segmentation such as medical imaging.

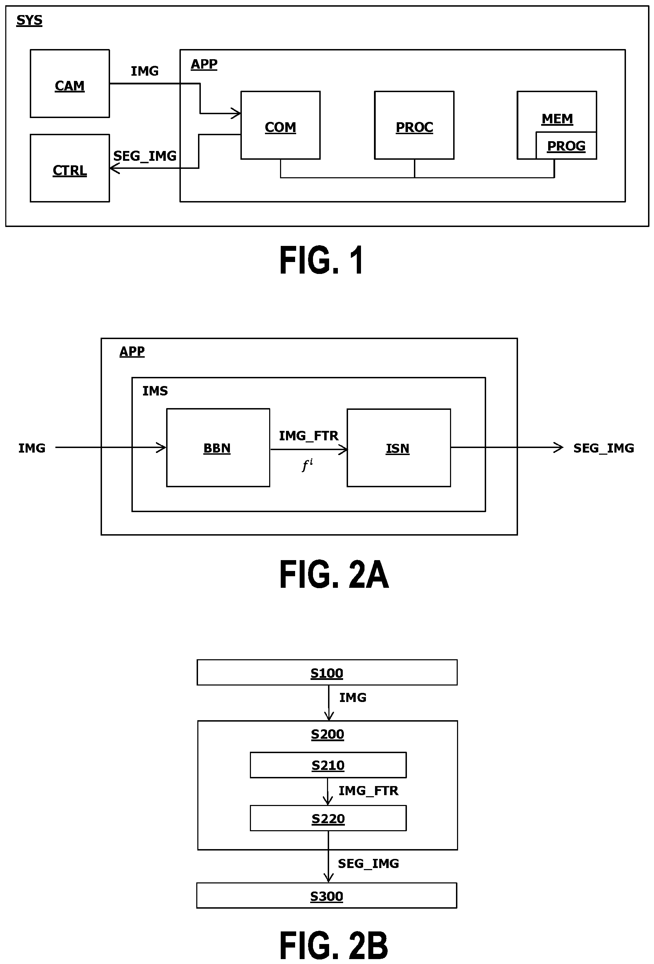

**FIG. 1** illustrates the architecture of a driving assistance system according to an embodiment of the invention. This figure is described hereafter to introduce the context of the invention and provide an example application.

The driving assistance system SYS of FIG. 1 comprises: at least one camera CAM; an image segmentation device APP; and a control device CTRL. The driving assistance system SYS is, for instance, intended to be embedded in a vehicle.

The camera CAM is configured to capture images IMG. The image segmentation device APP is configured to perform image segmentation on the captured images IMG and provide segmented images SEG_IMG.

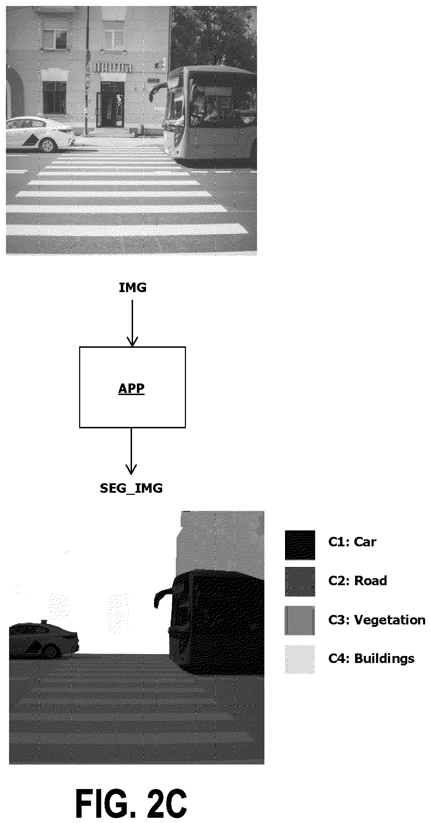

Specifically, the image segmentation device APP is configured to perform semantic segmentation on the images IMG. The device APP assigns class labels to pixels of the images IMG, such that the segmented images SEG_IMG are images having class labels associated with their pixels. For example, the device APP identify in captured images IMG collections of pixels that form distinct objects such as vehicles, pedestrians, traffic signs, *etc.* For illustrative purposes, FIG. 2C illustrates a captured image IMG and the associated segmented image SEG_IMG obtained by the device APP.

It should also be noted that the device APP performs image segmentation on images IMG of a target domain. The target domain is also referred to as the second type within the present disclosure. For instance, the images IMG of the target domain may correspond to images captured by a camera embedded in a vehicle.

In this embodiment, the image segmentation device APP is configured to provide the segmented images SEG_IMG to the control device CTRL. The control device CTRL is configured to determine control commands for the vehicle based on the segmented images SEG_IMG. For example, the control device CTRL may issue a braking command if a pedestrian is detected in the segmented images SEG_IMG.

Alternatively, the image segmentation device APP could provide the segmented images SEG_IMG to a restitution device for display, or to a database for storage, or to another device via a communication network.

The image segmentation device APP of FIG. 1 comprises: at least one processing unit or processor PROC; and at least one memory MEM.

The device APP also comprises a communication module COM configured to communicate with the camera CAM and/or the control device CTRL. No limitation is attached to the nature of the communication interfaces between these devices.

More particularly, the image segmentation device APP has, according to an embodiment, the hardware architecture of a computer. It may include a processor PROC, a random access memory, a read-only memory MEM, and a non-volatile memory. The memory MEM constitutes a storage medium conforming to the invention. The memory MEM is readable by processor PROC and stores a computer program PROG conforming to the invention. The computer program PROG comprises instructions for carrying out steps of an image segmentation method conforming to the invention, when the computer program PROG is executed by the processor PROC.

In particular, the PROG program implements an image segmentation model ISM. The architecture of image segmentation model ISM (also noted $g_\theta$) and its operation are described hereafter in reference to FIG. 2A-2C.

**FIG. 2A-2C** illustrate the architecture of an image segmentation device and steps of a method for performing image segmentation according to an embodiment of the invention.

The architecture of the image segmentation model ISM is represented in FIG. 2A. We describe this architecture in relation to the steps of the image segmentation method of FIG. 2B. For illustrative purposes, FIG. 2C depicts a captured image IMG and the corresponding segmented image SEG_IMG obtained by the device APP.

As shown in FIG. 2B, the proposed image segmentation method comprises (at least one of) the steps S100-S300 implemented by the device APP. The image segmentation method may include one or more iterations of each of these steps.

At step S100, the device APP obtains images IMG of the second type (*i.e.,* the target domain). For example, these images IMG can be captured by a camera CAM. Alternatively, these images IMG could be read from memory, downloaded from a database, or received from another device via a communication network.

Within the scope of the invention, the device APP could also perform, at this step, pre-processing operations on the images IMG such as cropping, resizing, filtering, *etc.*

At step S200, the device APP performs image segmentation on the images IMG of the second type using the image segmentation model ISM. In doing so, the device APP obtains the segmented images SEG_IMG.

Precisely, the device APP inputs the images IMG into the model ISM and determines the class labels (*e.g.*, car, pedestrian, traffic sign) of the pixels of the images IMG based on the outputs of the model ISM.

In the embodiment of FIG. 2A-2B, the image segmentation model ISM (also noted $g_\theta$) comprises: a backbone neural network BBN; and an image segmentation neural network ISN. In this embodiment, the step S200 includes steps S210 and S220 to determine the class labels of the pixels of the images IMG.

At step S210, the device APP inputs the images IMG into the backbone neural network BBN which outputs features IMG_FTR of the images.

The backbone neural network BBN may comprise convolutional layers, and/or fully-connected layers. In an example implementation, the backbone network BBN uses a ResNet-101 network as presented in Kaiming *et al.,* "Deep residual learning for image recognition", Proceedings of the IEEE conference on computer vision and pattern recognition. 2016. However, the invention is not limited to this example implementation.

At step S220, the device APP inputs the obtained features IMG_FTR into the segmentation network ISN. As illustrated in FIG. 2A, the segmentation network ISN is used to obtain the segmented images SEG_IMG. That is, the segmentation network is used to assign class labels to the pixels of the images IMG.

For example, let us consider a pixel in an image IMG. For that pixel, the segmentation network ISN takes as input the pixel feature $f^i$ provided by the backbone network BBN. The segmentation network ISN then outputs a set of probabilities for the different classes. The class with the highest probability is selected as the predicted class for that pixel.

The segmentation network ISN can include convolutional layers, and/or fully-connected layers. In an example implementation, the segmentation network ISN may use a DeepLabv2 network as presented in Liang-Chieh et al., "Deeplab: Semantic image segmentation with deep convolutional nets, atrous convolution, and fully connected crfs", IEEE transactions on pattern analysis and machine intelligence, 2017. However, the invention is not limited to this example implementation.

At step S300, the device APP outputs the segmented images SEG_IMG.

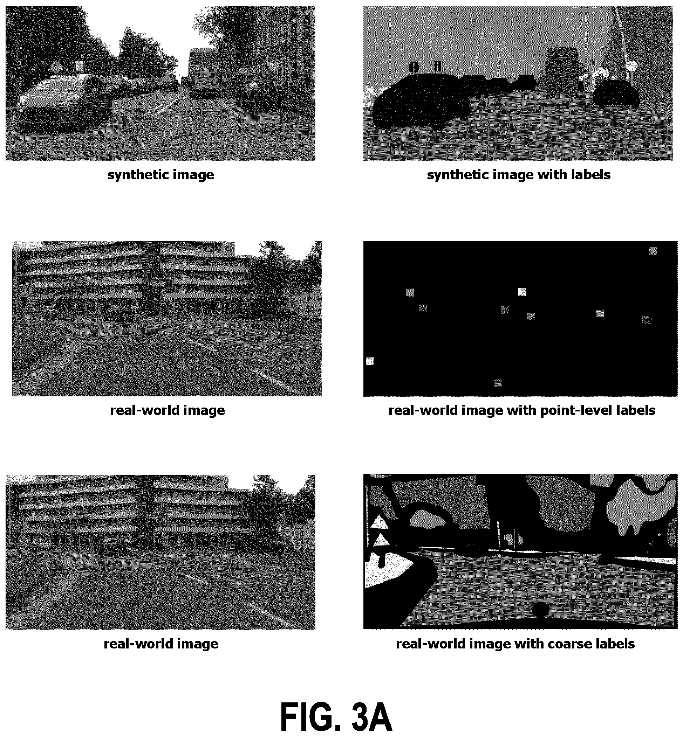

It should be emphasized that the accuracy of the image segmentation model ISM is directly related to its training. The proposed method for training the model ISM is described hereinafter in reference to FIG. 3A-3B.

**FIG. 3A** illustrates fully-labeled synthetic images and weakly-labeled real-world images used for training an image segmentation model according to embodiments of the invention.

The proposed method seeks to train the image segmentation model ISM so as to perform accurate image segmentation on images of a second type (*i.e.*, images of the target domain).

The model ISM (also noted $g_\theta$) is initially trained using a first set $\mathcal{X}_s = \{x_s\}$ of images of a first type and having labels $\mathcal{Y}_s = \{y_s\}$ (*i.e.*, labeled images of the source domain). Then, the model ISM is trained using the first set of images $\mathcal{X}_s$ and also a second set $\mathcal{X}_t = \{x_t\}$ of images of the second type and having weak-labels $\mathcal{Y}_t = \{y_t\}$ (*i.e.*, weakly-labeled images of the target domain). The weak-labels are exploited to improve the domain adaptation of the model ISM from images of the first type to images of the second type (*i.e.*, from the source domain to the target domain).

In the embodiments described below, the first set $\mathcal{X}_s$ of images of the first type is a set of fully-labelled images. However, within the scope of the invention, it could also be envisaged that the images of the first set $\mathcal{X}_s$ may comprise some unlabeled pixels.

In a particular embodiment, the first set $\mathcal{X}_s$ of images is a set of synthetic images labeled with fine pixel-level annotations $\mathcal{Y}_s$. An example of such a synthetic image is represented on FIG. 3A. Further, the second set of images $\mathcal{X}_t$ is a set of real-world images with weak-labels $\mathcal{Y}_t$. It should be noted that the proposed training method advantageously applies to different types of weak-labels $\mathcal{Y}_t$ such as image-level labels, point-level labels, or coarse labels. For illustrative purposes, FIG. 3A depicts real-world images with point-level labels and coarse labels.

The following description of the proposed method refers to this particular embodiment for the first and second types of images. However, the present invention applies to other types of images (*i.e.*, other source and target domains).

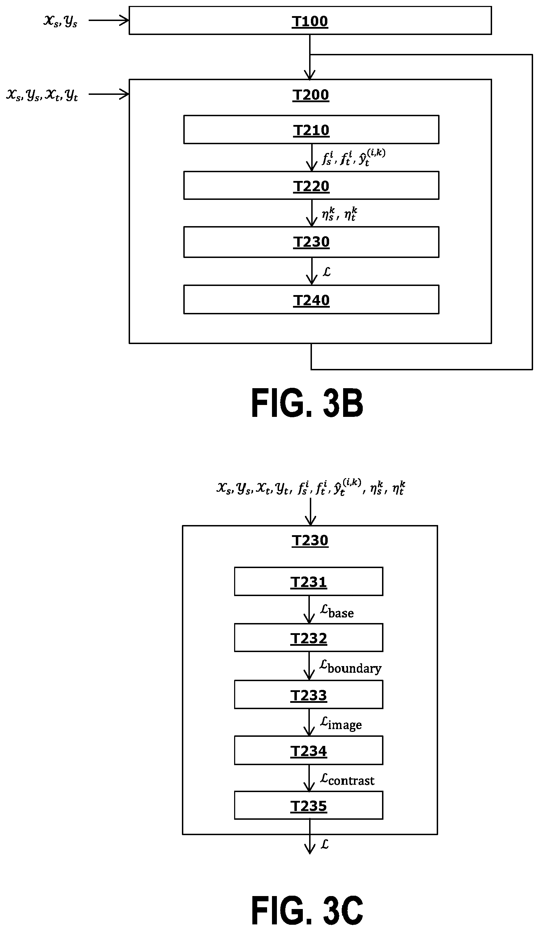

Now that we have described the datasets used for training the image segmentation model ISM, we detail the steps of the proposed training method in reference to FIG. 3B.

**FIG. 3B** illustrates steps of a method for training an image segmentation model according to an embodiment of the invention.

As shown in FIG. 3B, the proposed training method comprises (at least one of) the steps T100-T200 and may include one or more iterations of each of these steps.

At step T100, the image segmentation model ISM is pretrained using (all or part of) the first set $\mathcal{X}_s$ of images with labels $\mathcal{Y}_s$ (*i.e.,* labeled images of the source domain). We also note $g_\theta$ the image segmentation model ISM with $\theta$ the weights of the model.

At this step, the model ISM can be initialized using the parameters of an image segmentation model trained on the first set of images $\mathcal{X}_s$. For instance, the weights $\theta$ of the segmentation network ISN can be initialized with the weights of a DeepLabv2 network (see previously cited reference) trained on a standard set of fully-labeled synthetic images such as the GTA-5 or Synthia datasets.

It is important to note that no limitation is attached to the solution used at step T100 for pretraining the model ISM. The proposed method can be used to improve the domain adaptation of any pretrained model ISM, regardless of the technique used to pretrain it.

In a particular embodiment, the model ISM is pretrained using a first set $\mathcal{X}_s$ of fully-labeled images (*i.e.,* fully-labeled images of the source domain).

However, within the scope of the invention, the model ISM could also be pretrained based on the first set $\mathcal{X}_s$ of images with labels $\mathcal{Y}_s$ using any other training solutions. For instance, the model ISM could have been trained using a mix of supervised and unsupervised losses (*e.g.,* using a first set $\mathcal{X}_s$ comprising images with some unlabeled pixels), or even by a previous iteration of the proposed training method.

At step T200, the model ISM is trained using: (all or part of) the first set $\mathcal{X}_s$ of images with labels $\mathcal{Y}_s$ (*i.e.,* labeled images of the source domain); and the second set $\mathcal{X}_t$ of images with weak-labels $\mathcal{Y}_t$ (*i.e.,* weakly-labeled images of the target domain).

For clarification purposes, it should be noted that the model ISM is trained using only the first set $\mathcal{X}_s$ and the second set $\mathcal{X}_t$. In other words, the model ISM is trained without using fully-labeled images of the second type.

In the embodiment of FIG. 3B, the step T200 comprises (at least one of) the steps T210-T240. The proposed method can comprise multiple training iterations of step T200.

Hereinafter, we use the following notations: *i* denotes a pixel index; *k* is a class index; *s* and *t* subscripts are respectively used for elements of the source and target domains.

At step T210, pixel features $f_s^i$ and $f_t^i$ are respectively obtained for the pixels of the images of the first set $\mathcal{X}_s$ and the second set $\mathcal{X}_t$. In addition, pseudo-labels $\hat{y}_t^{(i,k)}$ are obtained for the unlabeled pixels of the images of the second set $\mathcal{X}_t$.

Specifically, the pixel features $f_s^i$ and $f_t^i$ are provided by the backbone network BBN of the model ISM (see FIG. 2A), which takes as input the images of the first $\mathcal{X}_s$ and second $\mathcal{X}_t$ sets. The pixel features $f_s^i$ and $f_t^i$ are then inputted into the image segmentation network ISN, which outputs class prediction probabilities $p_s^{(i,k)}$ and $p_t^{(i,k)}$.

Alternatively, in a particular embodiment, the proposed training method uses another model (referred to as the teacher model $h_\phi$) to obtain the features $f_t^i$ and the pseudo-labels $\hat{y}_t^{(i,k)}$ for the images of the second set $\mathcal{X}_t$ (*i.e.,* for the images of the target domain).

In reference to the image segmentation model ISM (referred to as the student model $g_\theta$), the teacher model $h_\phi$ has the same architecture but different weights $\phi$. After each training iteration, the weights $\phi$ of the teacher model are updated" based on the weights $\theta$ of the student model using an exponential moving average. That is, $\phi_{u+1} = \lambda \cdot \phi_u + (1 - \lambda) \cdot \theta_u + 1$ with $u$ a training iteration index and $\lambda$ a momentum parameter (*e.g.*, $\lambda = 0.999$). It should be noted that no gradients will be backpropagated into the teacher model.

Regarding the use of teacher and student models, further implementation details can be, for instance, derived from Hoyer et al. "Daformer: Improving network architectures and training strategies for domain-adaptive semantic segmentation", Proceedings of the IEEE/CVF Conference on Computer Vision and Pattern Recognition, 2022.

The use of the teacher model $h_\phi$ allows improving the training of the image segmentation model ISM. In particular, this embodiment enhances the transfer of knowledge from the source domain to the target domain.

Next, the pseudo-labels $\hat{y}_t^{(i,k)}$ for the unlabeled pixels of the images of the second set $\mathcal{X}_t$ are obtained using the prediction probabilities $p_t^{(i,k)}$. For instance, for a given pixel i and class *k*, the pseudo label $\hat{y}_t^{(i,k)}$ can be expressed by:

$$\hat{y}_t^{(i,k)} = \begin{cases} 1, \text{if } k = \arg\max_c p_t^{(i,c)} \text{ and } p_t^{(i,k)} > \tau \\ 0, \text{otherwise} \end{cases}, (1)$$

where $\tau$ is a fixed confidence parameter (*e.g.*, $\tau = 0.96$).

At step T220, class prototypes $\eta_t^k$ are obtained using the weak-labels $y_t^{(i,k)}$ and/or the pseudo-labels $\hat{y}_t^{(i,k)}$ of the images of the second set $\mathcal{X}_t$. Specifically, the class prototypes $\eta_t^k$ are obtained as follows.

If the weak-labels $y_t^{(i,k)}$ are point-level or coarse labels, anchor features $a_t^k$ are obtained by averaging the pixel features $f_t^i$ corresponding to the labeled pixels. In this case, the anchor feature $a_t^k$ for class *k* is expressed by:

$$a_t^k = \frac{\sum_i f_t^i \cdot \left[y_t^{(i,k)} = 1\right]}{\sum_i \left[y_t^{(i,k)} = 1\right]}, (2)$$

where [·] notes the Iverson bracket such that [*P*] equals 1 if *P* is true and 0 otherwise.

If the weak-labels $y_t^{(i,k)}$ are image-level labels (*i.e.*, there is no labeled pixels), the anchor feature $a_t^k$ is obtained by averaging all features $f_t^i$ that are pseudo-labeled. That is, the anchor feature $a_t^k$ for class *k* is expressed by:

$$a_t^k = \frac{\sum_i f_t^i \cdot \left[\hat{y}_t^{(i,k)} = 1\right]}{\sum_i \left[\hat{y}_t^{(i,k)} = 1\right]}. (3)$$

For each feature $f_t^i$ and each class *k*, a weight is obtained using $w^{(i,k)} = f_t^i \cdot a_t^k$. This weight $w^{(i,k)}$ measures the similarity between the feature $f_t^i$ and the anchor $a_t^k$. It is used as the contribution of the feature $f_t^i$ for computing the prototype $\eta_t^k$ for class *k*. The class prototype $\eta_t^k$ is then expressed by:

$$\eta_t^k = \frac{\sum_i f_t^i \cdot \left[\bar{y}_t^{(i,k)} = 1\right] \cdot w^{(i,k)}}{\sum_i \left[\bar{y}_t^{(i,k)} = 1\right] \cdot w^{(i,k)}} \cdot (4)$$

In the above expression, $\bar{y}_t$ denotes the union of pseudo-labels $\hat{y}_t$ and weak-labels $Yt$.

Similarly, class prototypes $\eta_s^k$ are obtained for the images of the first set $X_s$ *(i.e., for the source domain)*. Since in this embodiment these images are fully-labeled, the labels $y_s$ are used to construct prototypes. The class prototypes $\eta_s^k$ are obtained using expressions similar to Eq. (2) and (4), but using features $f_s^i$ and labels $y_s$ of the images of the first set $X_s$ .

At step T230, a loss function $\mathcal{L}$ is evaluated. In particular, the proposed loss function $\mathcal{L}$ is based on the class prototypes $\eta_t^k$ and the weak-labels $y_t$ of the images of the second set $X_t$ (see discussions below). We detail the different components of the proposed loss function $\mathcal{L}$ and their respective contributions in reference to FIG. 3C.

At step T240, the parameters of the image segmentation model ISM are updated to minimize the loss function $\mathcal{L}$ .

For instance, the weights $\theta$ of the image segmentation model ISM can be updated using stochastic gradient descent to minimize the loss function $\mathcal{L}$ . However, within the scope of the invention, it could also be contemplated to update other parameters of the model ISM such as the number of neurons or layers to minimize the loss function $\mathcal{L}$ .

The proposed loss function $\mathcal{L}$ is based, as indicated above, on the class prototypes $\eta_t^k$ and the weak-labels $y_t$ of the images of the second set $X_t$ *(i.e., images of the target domain)*. We emphasize that the proposed method uses the guidance of weak-labels for computing class prototypes. This allows obtaining class prototypes that are representative of the class features in images of the second type (*i.e.,* in images of the target domain). Improved accuracy of the image segmentation model ISM follows as a result.

For point-level and coarse labels, the class prototypes are directly computed using the weak-labels, see Eq. (2) and (4). The proposed computation assigns higher weights to pixel features with weak-labels. This allows the class prototypes to be closer to the pixels features with weak-labels than the pixel features with pseudo-labels, which can be noisy. This contributes to obtaining class prototypes that are effectively representative of the class features in the images of the second type (*i.e.,* the target domain).

For image-level labels, the weak-labels are not directly used to compute the class prototypes. Still, the weak-labels are used to learn a feature space such that features are close to prototypes of classes present in an image and distant from prototypes of classes not present in the image. This is achieved by using the component $\mathcal{L}_{\text{image}}^1$ in the proposed loss function $\mathcal{L}$ as detailed below in reference to FIG. 3C.

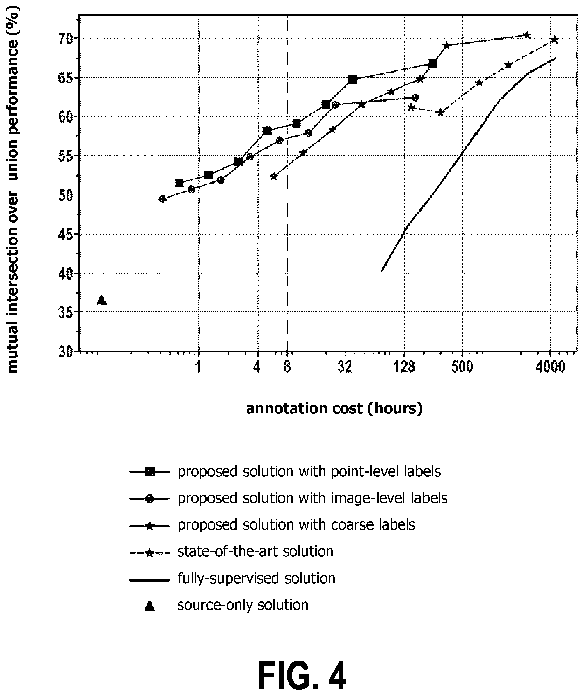

Experimental results show that the proposed solution constructing class prototypes under the guidance of weak-labels significantly improves the accuracy of the image segmentation model in comparison with existing solutions. The experimental results are presented and discussed below in reference to FIG. 4, but first the proposed loss function $\mathcal{L}$ is further detailed in reference to FIG. 3C.

**FIG. 3C** illustrates the steps for evaluating the loss function in a method for training an image segmentation model according to an embodiment of the invention.

In the embodiment of FIG. 3C, the step T230 of evaluating the loss function $\mathcal{L}$ comprises (at least one of) the following steps T231-T235. Each of these steps corresponds to the evaluation of one of the components of the loss function $\mathcal{L}$ .

At step T231, a loss component $\mathcal{L}_{\text{base}}$ is evaluated. This component is used to provide an initial baseline for training the image segmentation model ISM.

The loss component $\mathcal{L}_{\text{base}}$ is based on classification losses using at least: the labels $y_s$ of the images of the first set $\mathcal{X}_s$ *(i.e., the source domain)*; and the pseudo-labels $\hat{\mathcal{Y}}_t$ for the unlabeled pixels of the images of the second set $\mathcal{X}_t$ *(i.e., the target domain)*.

When the weak-labels $\mathcal{Y}_t$ are point-level or coarse labels, the component $\mathcal{L}_{\text{base}}$ is further based on a classification loss using: the weak-labels $\mathcal{Y}_t$ for the labeled pixels of the images of the second set $\mathcal{X}_t$. In such case, the loss component $\mathcal{L}_{\text{base}}$ is be expressed by:

$$\mathcal{L}_{\text{base}} = \mathcal{L}_{\text{cl}}\big(\mathcal{Y}_s, g_\theta(\mathcal{X}_s)\big) + \mathcal{L}_{\text{cl}}\big(\hat{\mathcal{Y}}_t, g_\theta(\mathcal{X}_t)\big) + \mathcal{L}_{\text{cl}}\big(\mathcal{Y}_t, g_\theta(\mathcal{X}_t)\big). \quad (5)$$

where $\mathcal{L}_{\text{cl}}$ denotes a classification loss function such as a cross-entropy loss function.

When the weak-labels $\mathcal{Y}_t$ are image-level labels (no labeled pixels), the expression of the component $\mathcal{L}_{\text{base}}$ is similar to the one above, but without the term $\mathcal{L}_{\text{cl}}\big(\mathcal{Y}_t, g_\theta(\mathcal{X}_t)\big)$.

At step T232, a loss component $\mathcal{L}_{\text{boundary}}$ is evaluated. This component is used to train the model ISM such that it accurately determines the boundaries of objects in the images. In particular, the learning of boundary information relies on the images of the first set $\mathcal{X}_s$ with labels $\mathcal{Y}_s$ *(i.e., labeled images of the source domain)*.

The loss component $\mathcal{L}_{\text{boundary}}$ is applied for the images of the first set $\mathcal{X}_s$. It computes the similarity between the ground truth boundaries and the predicted boundaries. For instance, the loss component $\mathcal{L}_{\text{boundary}}$ can be evaluated using the expressions presented in Das et al. "Urban scene semantic segmentation with low-cost coarse annotation", 2023 IEEE Winter Conference on Applications of Computer Vision, 2023.

The use of the loss component $\mathcal{L}_{\text{boundary}}$ improves the training of the model ISM when trained with coarse labels, but also when using point-level or image-level labels.

At step T233, a loss component $\mathcal{L}_{\text{image}}$ is evaluated. This component is based on the sum of two loss components and is expressed as:

$$\mathcal{L}_{\text{image}} = \mathcal{L}_{\text{image}}^1 + \mathcal{L}_{\text{image}}^2, \quad (6)$$

The component $\mathcal{L}_{\text{image}}^1$ is used during training as an image loss for improving the extraction of features of the images. The loss component $\mathcal{L}_{\text{image}}^1$ is evaluated for the images of the second set $\mathcal{X}_t$ as follows.

Similarity $m^{(i,k)}$ measures between the features $f_t^i$ and the class prototypes $\eta_t^k$ are determined using $m^{(i,k)} = f_t^i \cdot \eta_t^k$ (also referred to as pixel-wise class logit scores). These similarity measures are used to compute image-level predictions $p_t^k$ with the expression:

$$p_t^k = \sigma\left(\log\left(\frac{1}{N} \cdot \sum_{i=1}^{N} \exp\left(m^{(i,k)}\right)\right)\right), (7)$$

where $N$ is the number of pixels in the images. Next, the image loss $\mathcal{L}_{\text{image}}^1$ is evaluated based on the following expression:

$$\mathcal{L}_{\text{image}}^1 = \sum_{k=1}^{K} -y_t^k \cdot \log\left(p_t^k\right) - \left(1 - y_t^k\right) \cdot \log\left(1 - p_t^k\right). (8)$$

In this expression, $K$ is the total number of classes and $y_t^k$ is an image-level label which equals 1 if the class $k$ is present in an image and 0 otherwise. It should be noted that the image-level labels $y_t^k$ are obtained from the weak-labels $y_t$. This is straightforward for the different types of weak-labels considered, namely, image-levels labels, point-level labels and coarse labels.

This loss component $\mathcal{L}_{\text{image}}^1$ is based on the computed class prototypes $\eta_t^k$. It allows learning a feature space such that features are close to prototypes of classes present in an image and distant from prototypes of classes not present in an image. The component $\mathcal{L}_{\text{image}}^1$ capitalizes on prototype-based learning guided by the weak-labels to learn discriminative representations of the images of the second type (*i.e.*, the target domain).

The component $\mathcal{L}_{\text{image}}^2$ is evaluated for the images of the second set $\mathcal{X}_t$ as follows.

We compute image-level predictions $p'^k_t$ using the following expression:

$$p'^k_t = \sigma\left(\log\left(\frac{1}{N} \cdot \sum_{i=1}^{N} \exp\left(m'^{(i,k)}\right)\right)\right), (9)$$

wherein $m'^{(i,k)}$ are pixel-wise class logit scores provided by the last classification layer of the model ISM.

The loss component $\mathcal{L}_{\text{image}}^2$ is then evaluated based on the following expression:

$$\mathcal{L}_{\text{image}}^2 = \sum_{k=1}^{K} -y_t^k \cdot \log\left(p'^k_t\right) - \left(1 - y_t^k\right) \cdot \log\left(1 - p'^k_t\right). (10)$$

The loss component $\mathcal{L}_{\text{image}}^2$ penalizes predictions of classes that are not present in the image and improves predictions for classes present in an image. This loss component contributes to improving the performance of the image segmentation model ISM.

At step T234, a loss component $\mathcal{L}_{\text{contrast}}$ is evaluated. This component is used to train the image segmentation model ISM with contrastive learning.

The loss component $\mathcal{L}_{\text{contrast}}$ is evaluated using the following weighted sum:

$$\mathcal{L}_{\text{contrast}} = \lambda_1 \cdot \mathcal{L}_{\text{inter}} + \lambda_2 \cdot \mathcal{L}_{\text{intra}}, \quad (11)$$

where $\lambda_1$ and $\lambda_2$ are positive (non-zero) real coefficients (*e.g.*, $\lambda_1 = \lambda_2 = 0.5$). The components $\mathcal{L}_{\text{inter}}$ and $\mathcal{L}_{\text{intra}}$ are respectively used to perform inter-domain alignment and intra-domain alignment of the features.

<u>Intra-domain alignment</u> of features is performed for both the source and target domains using the component $\mathcal{L}_{\text{intra}}$. This component is thus expressed by: $\mathcal{L}_{\text{intra}} = \mathcal{L}_{\text{intra}}^{s} + \mathcal{L}_{\text{intra}}^{t}$, where $\mathcal{L}_{\text{intra}}^{s}$ is used to align features in the first set $\mathcal{X}_s$ (*i.e.*, domain alignment in the source domain) and $\mathcal{L}_{\text{intra}}^{t}$ is used to align features in the second set $\mathcal{X}_t$ (*i.e.*, domain alignment in the target domain).

The component $\mathcal{L}_{\text{intra}}^{t}$ is expressed by:

$$\mathcal{L}_{\text{intra}}^{t} = -\frac{1}{N_t{}'} \sum_{i \in S_t} \log\left(\frac{\exp\left(f_t^i \cdot n_t^k / \tau\right)}{\exp\left(f_t^i \cdot n_t^k / \tau\right) + \sum_{c \neq k} \exp\left(f_t^i \cdot n_t^c / \tau\right)}\right), \quad (12)$$

In this expression, $f_t^i$ denotes a pixel feature of an image of the second set $\mathcal{X}_t$ and $n_t^k$ denotes the prototype of the class to which belongs feature $f_t^i$. $S_t$ denotes a set of selected pixels of the images of the second set $\mathcal{X}_t$ and $N_t'$ is the number of pixels in this set.

The component $\mathcal{L}_{\text{intra}}^{t}$ is used to align the features of images of the second type with their corresponding class prototypes (*i.e.*, intra-domain alignment in the target domain). This allows learning a feature space in which the features of pixels belonging to a class are close to the corresponding prototype of this class. This component contributes to improving the accuracy of the image segmentation model ISM by learning compact and discriminative representations of the images.

Similarly, the component $\mathcal{L}_{\text{intra}}^{s}$ is evaluated for images of the first set $\mathcal{X}_s$ using an expression similar to Eq. (12), but using the pixel feature $f_s^i$ and the class prototypes $n_s^k$.

<u>Inter-domain alignment</u> of feature is performed across source and target domains using the component $\mathcal{L}_{\text{inter}}$. Specifically, this component is used to align the features $f_s^i$ of pixels of images of the first type (*i.e.*, the features of the source domain) with their corresponding class prototypes $n_t^k$ (*i.e.*, the class prototypes of the target domain).

The component $\mathcal{L}_{\text{inter}}$ is evaluated using the following expression:

$$\mathcal{L}_{\text{inter}} = -\frac{1}{N_s{}'} \sum_{i \in S_s} \log\left(\frac{\exp\left(f_s^i \cdot n_t^k / \tau\right)}{\exp\left(f_s^i \cdot n_t^k / \tau\right) + \sum_{c \neq k} \exp\left(f_s^i \cdot n_t^c / \tau\right)}\right), \quad (13)$$

In this expression, $f_s^i$ denotes a pixel feature of an image of the first set $\mathcal{X}_s$ and $n_t^k$ denotes the prototype of the class to which belongs feature $f_s^i$ . $S_s$ denotes a set of pixels of the images of the first set ( $\mathcal{X}_s$ ) and $N_s'$ is the number of pixels in this set.

It is important to note that the proposed inter-domain alignment is performed in an asymmetric way. The features of the source domain are aligned with the class prototypes of the target domain, but not the other way around. This asymmetric alignment only changes the features of the source domain and preserves the features of the target domain.

This is particularly advantageous as the proposed method uses weakly-labeled images of the second type (*i.e.,* of the target domain). It allows reducing the domain gap between the first and second types (*i.e.,* between the source and target domains). Experimental results show that the proposed asymmetric alignment provides significant performance enhancements of the image segmentation model ISM.

The selection of the pixels used for contrastive learning has a significant influence on the training of the model and its performance. In a particular embodiment, the selection of pixels used for contrastive learning is performed as follows.

For the images of the first set $\mathcal{X}_s$ , the pixels in the images are all labeled. Using these labels $y_s$, the pixels with incorrect predictions are selected for the set of pixels $S_s$ (*i.e.,* the selected pixels in the source domain).

For the images of the second set $\mathcal{X}_t$ , there are some labeled pixels in the images when the weak-labels $y_t$ are point-level labels or coarse labels. In this case, using these weak-labels $y_t$, pixels with incorrect predictions are selected for the set of pixels $S_t$ (*i.e.,* selected pixels in the target domain).

In addition, for the images of the second set $\mathcal{X}_t$ , there are some unlabeled regions in the images. For the unlabeled regions in these images, pixels with high predictions probabilities (*e.g.,* > 0.95) are also selected for the set of pixels $S_t$ (*i.e.,* selected pixels in the target domain).

However, the present invention is not limited to this particular embodiment and extends to other implementations for selecting the pixels used for contrastive learning.

At step T235, the loss function $\mathcal{L}$ is evaluated based on the loss components $\mathcal{L}_{\text{base}}$ , $\mathcal{L}_{\text{image}}, \mathcal{L}_{\text{contrast}}, \mathcal{L}_{\text{boundary}}$ . The loss function $\mathcal{L}$ can be evaluated using a weight sum of these components expressed by:

$$\mathcal{L} = \mathcal{L}_{\text{base}} + \gamma_1 \cdot \mathcal{L}_{\text{image}} + \gamma_2 \cdot \mathcal{L}_{\text{contrast}} + \gamma_3 \cdot \mathcal{L}_{\text{boundary}}, \quad (14)$$

where $\gamma_1$, $\gamma_2$, $\gamma_3$ are positive (non-zero) real coefficients (*e.g.,* $\gamma_1 = \gamma_2 = 1$, $\gamma_3 = 10$).

Experimental results confirm that each of one these components, when used in the loss function $\mathcal{L}$ , contributes to improving the performance of the image segmentation model ISM, see below Table 1. These results also show that the different loss components synergistically complement each other to improve the performance of the model. When all the loss components are used in the proposed loss function, the trained image segmentation model achieves the highest accuracy.

However, the present invention is not limited to the above expression of the loss function $\mathcal{L}$ . Within the scope of the invention, it could also be envisaged other embodiments wherein additional loss components are used in the loss function $\mathcal{L}$ .

**FIG. 4** illustrates experimental results related to a method for training an image segmentation model according to an embodiment of the invention. Specifically, the plot shown in FIG. 4 depicts the performance of the image segmentation model ISM trained using the proposed training method as a function of the annotation cost in hours.

Here, the performance of the image segmentation model is evaluated in terms of accuracy using a mean intersection over union metric. Different scenarios for the weak-labels are considered with point-level labels, coarse labels, and image-level labels. Different annotation budgets are also considered. We describe below the results of the experiments, but first we present the implementation details used in these experiments.

The implementation used in these experiments is the following. The image segmentation model ISM is implemented using: a DeepLabv2 network pre-trained on the GTA-5 dataset (see previously cited reference) for the segmentation network ISN; and a ResNet-101 network pre-trained on the ImageNet dataset (see previously cited reference) for the backbone network BBN.

The model ISM is trained using the proposed training method and, a stochastic gradient descent optimizer is used with: a poly learning rate scheduler having initial learning rate of $2.5 \times 10^{-4}$; a momentum of 0.9; and a weight decay rate of 0.0001. For training the model, 150 000 training iterations are performed.

In these experiments, the proposed training method also uses cross-domain data augmentation that mixes images from the first and second types (*i.e.,* from source and target domains). This allows further improving the performance of the model ISM. Further implementation details for cross-domain augmentation can be, for instance, derived from the previously cited reference Das *et al.*

The GTA5 dataset (*i.e.,* a set of photorealistic synthetic images with pixel-level annotations) is used for the first set $\mathcal{X}_s$ of images of the first type (*i.e.,* the source domain). The Cityscapes dataset (*i.e.,* a set of real-world images with fine pixel-level annotations) is used for the second set $\mathcal{X}_t$ of images of the first type (*i.e.,* the target domain). Thereby, the proposed solution is evaluated on a standard domain adaptation benchmark, from GTA-5 to Cityscapes.

The weak-labels $\mathcal{Y}_t$ for the images of the second set $\mathcal{X}_t$ are obtained as follows. Point-level labels are obtained by randomly sampling one pixel per class in the images of the Cityscapes dataset. Image-level labels are obtained using the available class labels in this dataset. The coarse labels used are the ones provided in the Cityscapes dataset (gtCoarse).

The annotation cost of the images is evaluated in terms of the time required to annotate them. The time required to annotate the images of the Cityscapes dataset with fine pixel-level annotations is around 90 minutes per image. In contrast, coarse labels annotation can be obtained in only 7 minutes per image. Point-level labels and image-level label can be respectively obtained in 45 and 30 seconds per image. In these experiments, different annotation budgets are considered by selecting different numbers of images for the second set $\mathcal{X}_t$ and using the above annotation costs (see FIG. 4).

The experimental results shown in FIG. 4 illustrate the tradeoff between annotation cost and performance of the image segmentation model for different types of weak-labels. and different annotation budgets. It can be observed on this figure that the proposed solution using point-level labels outperforms other types of weak-labels in lower annotation budgets.

In addition, this figure compares the proposed solution with some existing solutions. It depicts the performance of an image segmentation model ("source-only solution") with the same architecture, but trained only with the synthetic images of the GTA-5 dataset. It also illustrates the performance of an image segmentation model ("fully-supervised solution") with the same architecture, but trained with fully-labeled images of the Cityscapes dataset. It also illustrates the performance of the solution ("state-of-the-art solution") proposed in Chen, et al. "Semi-supervised domain adaptation based on dual-level domain mixing for semantic segmentation", IEEE/CVF Conference on Computer Vision and Pattern Recognition, 2021. The latter solution is based on a semi-supervised learning using a small set of fully-labeled real-world images (from the Cityscapes dataset) and large amounts of fully-labeled synthetic images (from the GTA-5 dataset).

As shown in FIG. 4, the proposed solution outperforms the other considered solutions. These results confirm that using weakly-labeled images provides a better tradeoff between performance and annotation cost than using fully-labeled images (*i.e.,* training images with pixel-level annotations). The proposed solution is even able to bridge the aforementioned performance gap with supervised learning (see the related art section). This demonstrates the effectiveness of using weak-labels for training an image segmentation model.

It should be emphasized that the proposed solution using coarse labels even achieves a higher accuracy than the fully-supervised solution, while using only a fraction of its annotation budget. Specifically, the proposed solution with coarse labels uses less than 8% of the annotation budget of the fully-supervised solution (347 *vs.* 4463 hours); and outperforms the latter by 1.7% of mean intersection over union (69.1% *vs.* 67.4%).

Similar experiments have been conducted using the Synthia dataset instead of the GTA-5 dataset and the results are similar to those presented above. More generally, the results of experiments on various standard datasets demonstrate that the proposed solution achieves significant performance gains in comparison with the state-of-the-art solutions.

**Table 1** illustrates experimental results related to the proposed method for training an image segmentation model according to embodiments of the invention.

This table presents ablation results with regard to the components used in the proposed loss function $\mathcal{L}$. It evaluates the contribution of each one of the loss components to the performance of the image segmentation model ISM. In these experiments, the performance of the model ISM is evaluated for different types of weak-labels, using the mean intersection over union in % and the implementation described above for the domain adaptation benchmark GTA-5 → Cityscapes in reference to FIG. 4.

**Table 1**

| $\mathcal{L}_{\text{base}}$ | $\mathcal{L}_{\text{boundary}}$ | $\mathcal{L}_{\text{contrast}}$ | $\mathcal{L}_{\text{image}}$ | image | point | coarse |
|:---:|:---:|:---:|:---:|:---:|:---:|:---:|
| ✓ | | | | 36.6 | 54.9 | 60.8 |
| ✓ | ✓ | | | 42.5 | 58.5 | 62.9 |
| ✓ | | ✓ | | 42.1 | 60.0 | 58.9 |
| ✓ | | | ✓ | 56.8 | 58.9 | 64.4 |
| ✓ | ✓ | ✓ | | 43.3 | 63.3 | 67.3 |
| ✓ | | ✓ | ✓ | 60.1 | 63.0 | 66.8 |
| ✓ | ✓ | | ✓ | 59.7 | 60.3 | 67.0 |
| ✓ | ✓ | ✓ | ✓ | **61.5** | **64.7** | **69.1** |

**Claims**

1. A method for training an image segmentation model (ISM) for segmenting images (IMG) of a second type, the model (ISM) having been trained (T100) using a first set ( $\mathcal{X}_s$ ) of images of a first type and having labels ( $\mathcal{Y}_s$ ),

   the method comprising training (T200) the model (ISM) using at least a second set ( $\mathcal{X}_t$ ) of images of the second type and having weak-labels ( $\mathcal{Y}_t$ ), the weakly-labeled images comprising unlabeled pixels, wherein said training (T200) is performed using a loss function ( $\mathcal{L}$ ) based on: similarity measures ( $f_t^i \cdot \eta_t^k$ ) between class prototypes ( $\eta_t^k$ ) and features ( $f_t^i$ ) of the images of the second set ( $\mathcal{X}_t$ ); and on the weak-labels ( $y_t^{(i,k)}$ ) of the images of the second set ( $\mathcal{X}_t$ ).

2. The method according to claim 1, wherein the first type of images corresponds to synthetic images ( $\mathcal{X}_s$ ), and the second type of images corresponds to images captured by at least one camera ( $\mathcal{X}_t$ ).

3. The method according to claim 1 or 2, wherein the class prototypes ( $\eta_t^k$ ) are obtained (T220) using: the weak-labels ( $y_t^{(i,k)}$ ) of the images of the second set ( $\mathcal{X}_t$ ); and/or pseudo-labels ( $\hat{y}_t^{(i,k)}$ ) for the unlabeled pixels of the images of the second set ( $\mathcal{X}_t$ ).

4. The method according to claim 3, wherein the class prototypes ( $\eta_t^k$ ) are obtained based on the expression:

$$\eta_t^k = \frac{\sum_i f_t^i \cdot \left[ \bar{y}_t^{(i,k)} = 1 \right] \cdot w^{(i,k)}}{\sum_i \left[ \bar{y}_t^{(i,k)} = 1 \right] \cdot w^{(i,k)}},$$

where: $k$ is a class index; $i$ is a pixel index; $f_t^i$ is a pixel feature of an image of the second set ( $\mathcal{X}_t$ ); [·] denotes the Iverson bracket; $\bar{y}_t = y_t \cup \hat{y}_t$, the union of the pseudo-labels $\hat{y}_t$ and the weak-labels $y_t$ of the images of the second set ( $\mathcal{X}_t$ ); and weight ( $w^{(i,k)} = f_t^i \cdot a_t^k$ with $a_t^k$ an anchor feature expressed by, if the images of the second set $\mathcal{X}_t$ ) comprise point-level labels or coarse labels ( $y_t^{(i,k)}$ ):

$$a_t^k = \frac{\sum_i f_t^i \cdot \left[ y_t^{(i,k)} = 1 \right]}{\sum_i \left[ y_t^{(i,k)} = 1 \right]},$$

or with $a_t^k$ expressed by, if the images of the second set ( $\mathcal{X}_t$ ) comprise image-level labels:

$$a_t^k = \frac{\sum_i f_t^i \cdot \left[ \hat{y}_t^{(i,k)} = 1 \right]}{\sum_i \mathbf{1} \left[ \hat{y}_t^{(i,k)} = 1 \right]}.$$

5. The method according to any one of claims 1 to 4, wherein the loss function ( $\mathcal{L}$ ) is based on a first component expressed by:

$$\mathcal{L}_{\text{image}}^1 = \sum_{k=1}^{K} -y_t^k \log(p_t^k) - (1 - y_t^k) \log(1 - p_t^k),$$

where: $k$ is a class index; $K$ is a number of classes; $y_t^k$ is an image label such that $y_t^k$ equals 1 if the class $k$ is present in an image of the second set ( $\mathcal{X}_t$ ) and 0 otherwise; and $p_t^k$ is an image-level prediction expressed by:

$$p_t^k = \sigma \left( \log \left( \frac{1}{N} \cdot \sum_{i=1}^{N} \exp(m^{(i,k)}) \right) \right),$$

where: $\sigma$ is a sigmoid function; $i$ is a pixel index; $N$ is a number of pixels; and $m^{(i,k)}$ are similarity measures between the features $f_t^i$ and the class prototypes $\eta_t^k$ .

6. The method according to any one of claims 1 to 5, wherein the loss function ( $\mathcal{L}$ ) is further based on contrastive learning.

7. The method according to claim 6, wherein the loss function ( $\mathcal{L}$ ) is based on a second component expressed by:

$$\mathcal{L}_{\text{intra}}^t = -\frac{1}{N_t{'}} \sum_{i \in S_t} \log \left( \frac{\exp(f_t^i \cdot n_t^k / \tau)}{\exp(f_t^i \cdot n_t^k / \tau) + \sum_{c \neq k} \exp(f_t^i \cdot n_t^c / \tau)} \right),$$

where: $i$ is a pixel-index; $S_t$ is a set of pixels of the images of the second set ( $\mathcal{X}_t$ ); $N_t{'}$ is a number of pixels; $f_t^i$ denotes a pixel feature of an image of the second set; $\eta_t^k$ denotes the prototype of the class to which belongs the feature $f_t^i$ ; and $\tau$ is a confidence parameter.

8. The method according to any one of claims 1 to 7, wherein said training (T200) of the model (ISM) also uses the first set ( $\mathcal{X}_s$ ) of images of the first type.

9. The method according to claims 6 and 8, wherein the loss function ( $\mathcal{L}$ ) is further based on similarity measures ( $f_s^i \cdot n_t^k$ ) between features ( $f_s^i$ ) of images of the first set ( $\mathcal{X}_s$ ) and the class prototypes ( $\eta_t^k$ ) obtained for the images of the second set ( $\mathcal{X}_t$ ).

10. The method according to claim 9, wherein the loss function ( $\mathcal{L}$ ) is based on a third component expressed by:

$$\mathcal{L}_{\text{inter}} = -\frac{1}{N_s'} \sum_{i \in S_s} \log\left(\frac{\exp\left(f_s^i \cdot n_t^k/\tau\right)}{\exp\left(f_s^i \cdot n_t^k/\tau\right) + \sum_{c \neq k} \exp\left(f_s^i \cdot n_t^c/\tau\right)}\right),$$

where: $i$ is a pixel-index; $S_s$ is a set of pixels of the images of the first set ( $\mathcal{X}_s$ ); $N_s'$ is a number of pixels; $f_s^i$ denotes a pixel feature of an image of the first set ( $\mathcal{X}_s$ ); $n_t^k$ denotes the prototype of the class to which belongs the feature $f_s^i$ ; and $\tau$ is a confidence parameter.

11. An image segmentation model (ISM) for segmenting images (IMG) of a second type, wherein the image segmentation model (ISM) has been trained using the method according to any one of claims 1 to 10.

12. An image segmentation device (APP) comprising at least one processor (PROC) and memory (MEM), the device (APP) being configured to implement an image segmentation model (ISM) according to claim 11.

13. A driving assistance system (SYS) comprising: a camera (CAM) for capturing images (IMG); and an image segmentation device (APP) according to claim 12 for segmenting the captured images (IMG).

14. A computer program (PROG) comprising instructions which, when the program (PROG) is executed by at least one processor (PROC), cause said at least one processor (PROC) to implement the method according to any one of claims 1 to 10.

15. A computer-readable medium (MEM) having stored thereon a computer program (PROG) according to claim 14.

**Amended claims in accordance with Rule 137(2) EPC.**

1. A method for training an image segmentation model (ISM) for segmenting images (IMG) of a second type, the model (ISM) having been trained (T100) using a first set ( $\mathcal{X}_s$ ) of images of a first type and having labels ( $\mathcal{Y}_s$ ), the method comprising training (T200) the model (ISM) using at least a second set ( $\mathcal{X}_t$ ) of images of the second type and having weak-labels ( $\mathcal{Y}_t$ ), the weakly-labeled images comprising unlabeled pixels, wherein said training (T200) is performed using a loss function ( $\mathcal{L}$ ) based on: similarity measures ( $f_t^i \cdot \eta_t^k$ ) between class prototypes ( $\eta_t^k$ ) and features ( $f_t^i$ ) of the images of the second set ( $\mathcal{X}_t$ ); and on the weak-labels ( $y_t^{(i,k)}$ ) of the images of the second set ( $\mathcal{X}_t$ ), and wherein the loss function ( $\mathcal{L}$ ) is based on a first component expressed by:

$$\mathcal{L}^1_{\text{image}} = \sum_{k=1}^{K} -y_t^k \log(p_t^k) - (1 - y_t^k) \log(1 - p_t^k),$$

where: $k$ is a class index; $K$ is a number of classes; $y_t^k$ is an image label such that $y_t^k$ equals 1 if the class $k$ is present in an image of the second set ($x_t$) and 0 otherwise; and $p_t^k$ is an image-level prediction expressed by:

$$p_t^k = \sigma\left( \log\left( \frac{1}{N} \cdot \sum_{i=1}^{N} \exp(m^{(i,k)}) \right) \right),$$

where: $\sigma$ is a sigmoid function; $i$ is a pixel index; $N$ is a number of pixels; and $m^{(i,k)}$ are similarity measures between the features $f_t^i$ and the class prototypes $\eta_t^k$.

2. The method according to claim 1, wherein the first type of images corresponds to synthetic images ($x_s$), and the second type of images corresponds to images captured by at least one camera ($x_t$).

3. The method according to claim 1 or 2, wherein the class prototypes ( $\eta_t^k$ ) are obtained (T220) using: the weak-labels ( $y_t^{(i,k)}$ ) of the images of the second set ($x_t$); and/or pseudo-labels ( $\hat{y}_t^{(i,k)}$ ) for the unlabeled pixels of the images of the second set ($x_t$).

4. The method according to claim 3, wherein the class prototypes ( $\eta_t^k$ ) are obtained based on the expression:

$$\eta_t^k = \frac{\sum_i f_t^i \cdot \left[ \bar{y}_t^{(i,k)} = 1 \right] \cdot w^{(i,k)}}{\sum_i \left[ \bar{y}_t^{(i,k)} = 1 \right] \cdot w^{(i,k)}},$$

where: $k$ is a class index; i is a pixel index; $f_t^i$ is a pixel feature of an image of the second set ($x_t$); [·] denotes the Iverson bracket; $\bar{y}_t = y_t \cup \hat{y}_t$, the union of the pseudo-labels $\hat{y}_t$ and the weak-labels $y_t$ of the images of the second set ($x_t$); and weight $w^{(i,k)} = f_t^i \cdot a_t^k$ with $a_t^k$ an anchor feature expressed by, if the images of the second set ($x_t$) comprise point-level labels or coarse labels ( $y_t^{(i,k)}$ ):

$$a_t^k = \frac{\sum_i f_t^i \cdot \left[ y_t^{(i,k)} = 1 \right]}{\sum_i \left[ y_t^{(i,k)} = 1 \right]},$$

or with $a_t^k$ expressed by, if the images of the second set ($x_t$) comprise image-level labels:

$$a_t^k = \frac{\sum_i f_t^i \cdot \left[ \hat{y}_t^{(i,k)} = 1 \right]}{\sum_i \mathbf{1}\left[ \hat{y}_t^{(i,k)} = 1 \right]}.$$

5. The method according to any one of claims 1 to 4, wherein the loss function ( $\mathcal{L}$ ) is further based on contrastive learning.

6. The method according to claim 5, wherein the loss function ($\mathcal{L}$) is based on a second component expressed by:

$$\mathcal{L}_{\text{intra}}^{t} = -\frac{1}{N_t{}'} \sum_{i \in S_t} \log \left( \frac{\exp(f_t^i \cdot n_t^k / \tau)}{\exp(f_t^i \cdot n_t^k / \tau) + \sum_{c \neq k} \exp(f_t^i \cdot n_t^c / \tau)} \right),$$

where: $i$ is a pixel-index; $S_t$ is a set of pixels of the images of the second set ($\mathcal{X}_t$); $N_t{}'$ is a number of pixels; $f_t^i$ denotes a pixel feature of an image of the second set; $n_t^k$ denotes the prototype of the class to which belongs the feature $f_t^i$ ; and $\tau$ is a confidence parameter.

7. The method according to any one of claims 1 to 6, wherein said training (T200) of the model (ISM) also uses the first set ($\mathcal{X}_s$) of images of the first type.

8. The method according to claims 5 and 7, wherein the loss function ($\mathcal{L}$) is further based on similarity measures ($f_s^i \cdot n_t^k$ ) between features ( $f_s^i$ ) of images of the first set ($\mathcal{X}_s$) and the class prototypes ( $n_t^k$ ) obtained for the images of the second set ($\mathcal{X}_t$).

9. The method according to claim 8, wherein the loss function ($\mathcal{L}$) is based on a third component expressed by:

$$\mathcal{L}_{\text{inter}} = -\frac{1}{N_s{}'} \sum_{i \in S_s} \log \left( \frac{\exp(f_s^i \cdot n_t^k / \tau)}{\exp(f_s^i \cdot n_t^k / \tau) + \sum_{c \neq k} \exp(f_s^i \cdot n_t^c / \tau)} \right),$$

where: $i$ is a pixel-index; $S_s$ is a set of pixels of the images of the first set ($\mathcal{X}_s$); $N_s{}'$ is a number of pixels; $f_s^i$ denotes a pixel feature of an image of the first set ($\mathcal{X}_s$); $n_t^k$ denotes the prototype of the class to which belongs the feature $f_s^i$ ; and $\tau$ is a confidence parameter.

10. An image segmentation model (ISM) for segmenting images (IMG) of a second type, wherein the image segmentation model (ISM) has been trained using the method according to any one of claims 1 to 9.

11. An image segmentation device (APP) comprising at least one processor (PROC) and memory (MEM), the device (APP) being configured to implement an image segmentation model (ISM) according to claim 10.

12. A driving assistance system (SYS) comprising: a camera (CAM) for capturing images (IMG); and an image segmentation device (APP) according to claim 11 for segmenting the captured images (IMG).

13. A computer program (PROG) comprising instructions which, when the program (PROG) is executed by at least one processor (PROC), cause said at least one processor (PROC) to implement the method according to any one of claims 1 to 9.

14. A computer-readable medium (MEM) having stored thereon a computer program (PROG) according to claim 13.

FIG. 1

FIG. 2A

FIG. 2B

IMG

APP

SEG_IMG

C1: Car

C2: Road

C3: Vegetation

C4: Buildings

# FIG. 2C

synthetic image

synthetic image with labels

real-world image

real-world image with point-level labels

real-world image

real-world image with coarse labels

# FIG. 3A

## FIG. 3B

## FIG. 3C

**FIG. 4**

**EP 4 451 230 A1**

Europäisches Patentamt
European Patent Office
Office européen des brevets

# EUROPEAN SEARCH REPORT

Application Number

EP 23 16 8202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FEIHU ZHANG ET AL: "Unsupervised Contrastive Domain Adaptation for Semantic Segmentation", ARXIV.ORG, CORNELL UNIVERSITY LIBRARY, 201 OLIN LIBRARY CORNELL UNIVERSITY ITHACA, NY 14853, 18 April 2022 (2022-04-18), XP091205541, * the whole document * | 1-15 | INV. G06V10/774 G06V10/26 |
| X | INIGO ALONSO ET AL: "Semi-Supervised Semantic Segmentation with Pixel-Level Contrastive Learning from a Class-wise Memory Bank", ARXIV.ORG, CORNELL UNIVERSITY LIBRARY, 201 OLIN LIBRARY CORNELL UNIVERSITY ITHACA, NY 14853, 6 August 2021 (2021-08-06), XP091023966, * the whole document * | 1-3,8, 11-15 | |

TECHNICAL FIELDS SEARCHED (IPC)

G06V

The present search report has been drawn up for all claims

| Place of search | Date of completion of the search | Examiner |
|---|---|---|
| The Hague | 12 September 2023 | de Bont, Emma |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LIANG-CHIEH et al.** Deeplab: Semantic image segmentation with deep convolutional nets, atrous convolution, and fully connected crfs. *IEEE transactions on pattern analysis and machine intelligence,* 2017
- **HOYER et al.** Daformer: Improving network architectures and training strategies for domain-adaptive semantic segmentation. *Proceedings of the IEEE/CVF Conference on Computer Vision and Pattern Recognition,* 2022

- **DAS et al.** Urban scene semantic segmentation with low-cost coarse annotation. *2023 IEEE Winter Conference on Applications of Computer Vision,* 2023
- **CHEN et al.** Semi-supervised domain adaptation based on dual-level domain mixing for semantic segmentation. *IEEE/CVF Conference on Computer Vision and Pattern Recognition,* 2021